Europäisches Patentamt

European Patent Office

Office européen des brevets

(11) Veröffentlichungsnummer: **0 098 643**
A2

# (12) EUROPÄISCHE PATENTANMELDUNG

(21) Anmeldenummer: 83200950.0

(51) Int. Cl.³: **B 01 D 29/10**

(22) Anmeldetag: 27.06.83

(30) Priorität: 05.07.82 CH 4079/82
07.12.82 CH 7100/82

(71) Anmelder: DrM, Dr. Müller AG, Alte Landstrasse 421,
CH-8708 Männedorf ZH (CH)

(43) Veröffentlichungstag der Anmeldung: 18.01.84
Patentblatt 84/3

(72) Erfinder: Müller, Hans, Dr.-Ing., Im Allmendli,
CH-8708 Erlenbach ZH (CH)
Erfinder: Schumacher, Ivo, Haldenstrasse 67,
CH-8708 Männedorf (CH)

(84) Benannte Vertragsstaaten: AT BE CH DE FR GB IT LI LU
NL SE

(74) Vertreter: Herrmann, Peter, Bauernhalde 9,
CH-8708 Männedorf ZH (CH)

(54) Vorrichtung zur Befestigung von Filterkerzen.

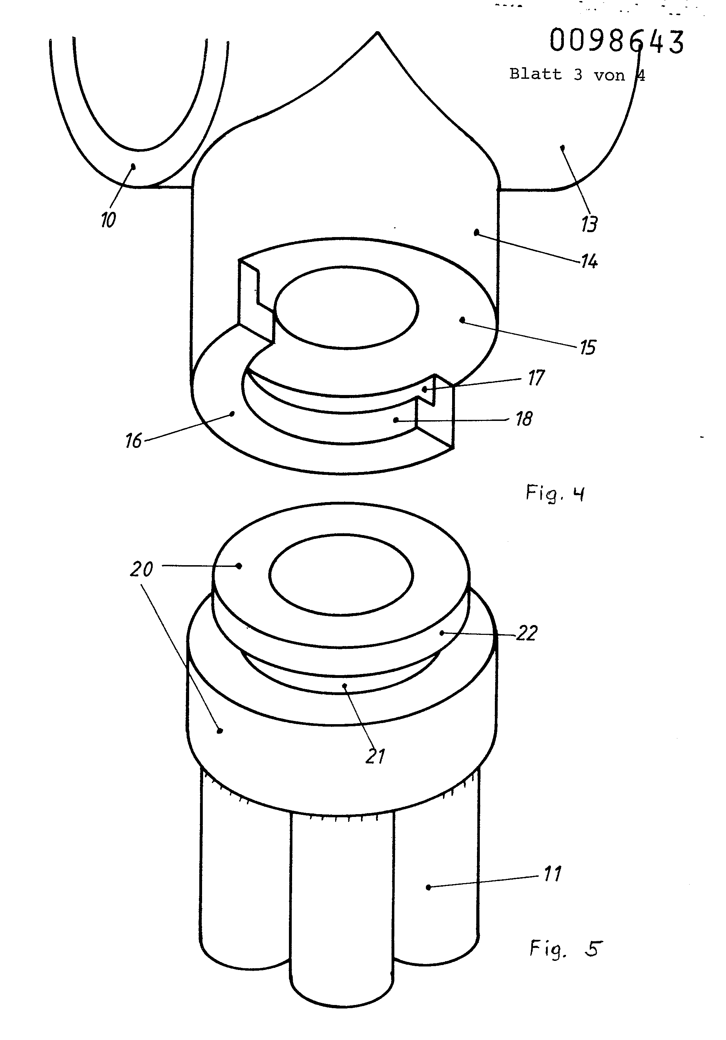

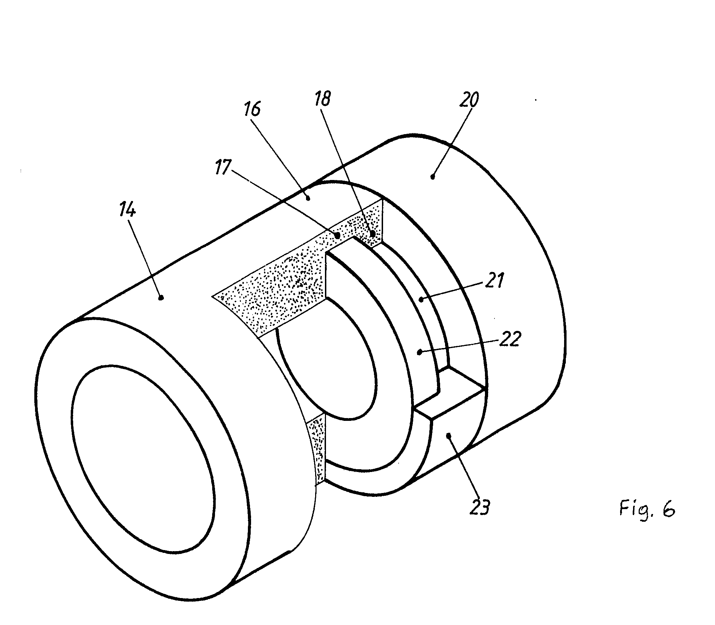

(57) Eine Filterkerzenbefestigung an einem aus T-Rohren
(10) zusammengesetzten Sammelrohr (7) besteht aus einer
halbkreisförmigen Eindrehung (Fig. 4), die eine Vertiefung
(15) und eine Schulter (16) aufweist. In diese Eindrehung
(Fig. 4) ist ein Gegenstück (Fig. 5) mit passender Schulter
(22) eingedreht. Die verbleibende halbkreisförmige Öffnung
wird mit einem Füllring (23) verschlossen und mit Gewebe
überzogen, welches gleichzeitig das Filtergewebe darstellen kann.

## Vorrichtung zur Befestigung von Filterkerzen

Die Erfindung betrifft eine Vorrichtung zur Befestigung von Filterkerzen in einem Druckfilterbehälter.

Befestigungen von Filterkerzen sind bekannt. Sie werden als Kupplungen in Form von Gewindeanschlüssen, Flanschverbindungen oder Bajonettverschlüssen ausgeführt. So ist aus der DE-AS 1 222 479 eine Filterkerzenbefestigung in einem Druckfilter bekannt, in welchem Filterkerzen an einer Tragplatte befestigt sind, die den Trübe- und Filtratraum voneinander trennt. Jede Filterkerze ist dabei mittels eines lose einlegbaren elastischen Ringes sowie lösbaren Klemmelementen befestigt. Solche Befestigungen können nicht verwendet werden, wenn die Filterkerzen an einem Rohr angebracht werden müssen, welches gleichzeitig als Filtratraum und Klarlaufabfluss dienen soll. Auch haben die anderen genannten Befestigungsarten den Nachteil, dass sie entweder in der Herstellung oder in der Verwendung zu aufwendig und damit unwirtschaftlich sind.

Aus der CH-PS 607 751 ist ein Druckfilter der Art bekannt. Dieser Filter besteht aus einem Druckbehälter, in welchem hängende Filterelemente an herausnehmbaren, parallel gelagerten Hohlkörpern hintereinander angeordnet sind. Eine Anzahl solcher Hohlkörper oder Segmente führen über Filtratableitungsrohre durch die obere Behälterwand auf ein Sammelrohr. Solche mit kerzenförmigen Filterelementen

versehen Segmente haben den Vorteil, dass beim Ausbau des Filterpaketes einzelne Segmente herausgenommen werden können, ohne das ganze Filterpaket herausnehmen zu müssen, was aufwendige Kranaufbauten erforderlich macht. Die aus Metall gefertigten Segmente haben jedoch den grossen Nachteil, dass sie selbst sehr schwer und insbesondere teuer sind. Die Unwirtschaftlichkeit ist nicht nur im Konstruktionsmaterial, sondern auch in der Bearbeitung zu suchen.

Aufgabe der Erfindung ist es, eine einfache und stabile Befestigung für Filterkerzen an Sammelrohren zu schaffen, sowie eine Befestigung der Sammelrohre im Filterbehälter. Eine weitere Aufgabe ist es, eine leicht herstellbare Befestigung zu schaffen.

Diese Aufgabe wird nach Patentanspruch 1 gelöst und ist dadurch gekennzeichnet, dass die Befestigung jeder Filterkerze aus einem T-Rohrstück mit einer halbkreisförmigen Eindrehung, bestehend aus einer Vertiefung und einer Schulter und das Gegenstück mit einer in die Eindrehung passenden Schulter versehen ist.

Die T-förmigen Rohrteile bestehen aus Kunststoff und sind ineinander schiebbar, so dass sie ein Abflusssammelrohr bilden, welches das Filtrat aus den einzelnen Filterkerzen aufzunehmen vermag. Die Kupplungsstelle ist mit einem schlauchförmigen Gewebestück abgedeckt, wobei dieses Gewebe gleichzeitig das eigentliche Filtergewebe darstellen kann, welches die Filtration besorgt. Die halbkreisförmige Stelle nach dem Zusammenstellen der Kupplung wird mit einem Füllring geschlossen.

- 3 -                                    0098643

Die Erfindung soll anhand einer Zeichnung näher beschrieben werden. Es zeigen:

Fig. 1 einen Aufriss durch einen Druckkerzenfilter
Fig. 2 einen Schnitt A-A durch Fig. 1


Fig.     die Filterkerzenbefestigung schematisch
Fig.     ein T-Stück
Fig.     einen Kerzenkopf
Fig.     den zusammengesetzten Verschluss in der Perspektive
Fig.     einen Füllring

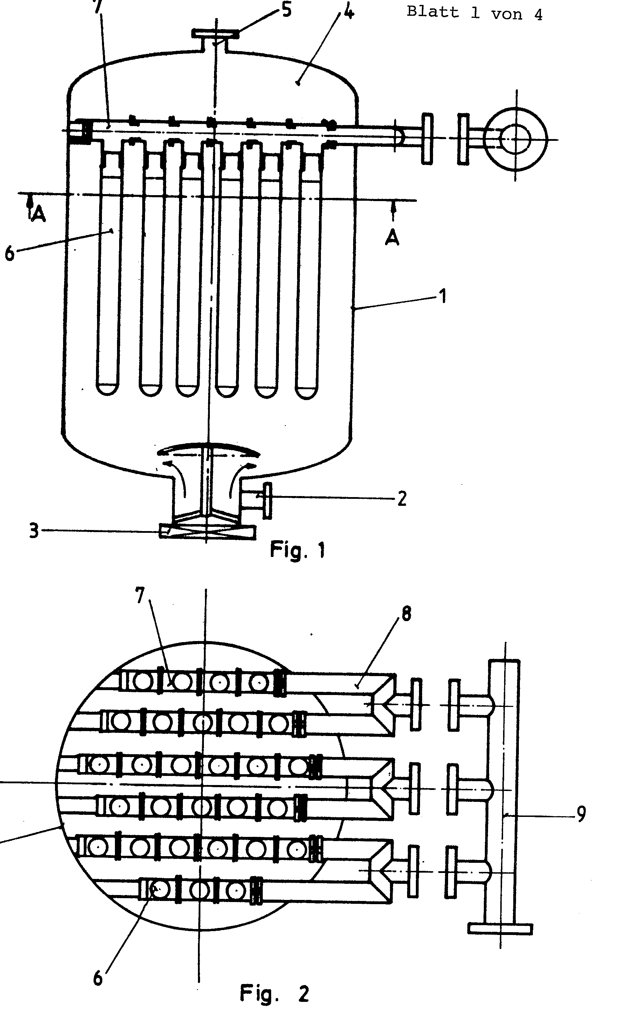

Der Filter besteht gemäss den Fig. 1 und Fig. 2 aus einem Druckbehälter 1. Ein Stutzen 2 im unteren Teil des Behälters 1 dient zur Aufgabe der zu filtrierenden Trübe. Die Filterrückstände werden über die Oeffnung eines Stutzens 3 ausgetragen. Im Deckel 4 des Filterbehälters 1 ist ein Stutzen 5 zur Entlüftung angebracht. Die Filterelemente 6 sind serienmässig an einem Sammelrohr 7 angebracht. Jeder Hohlkörper ist mit einem Rohr 8 zur Ableitung des Filtrates durch die Behälterwand auf ein Ableitungsrohr 9 versehen.

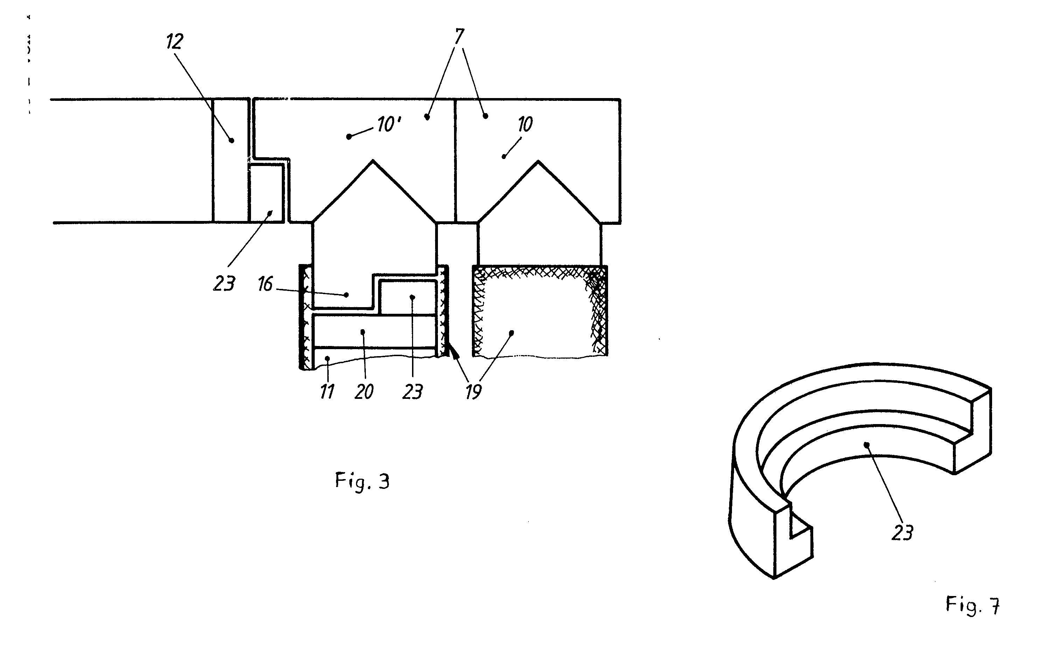

Fig. 3 zeigt die Befestigung von Kerzenfilterelementen an einem Sammelrohr. Das Sammelrohr 7 besteht aus aneinander geschweissten T-Stücken 10 aus Kunststoff. Eine dichte Verbindung des T-Stückes 10 mit dem T-Stück 10' erfolgt durch das Ineinanderstecken beider Teile des elastischen Kunststoffes. Am unteren Teil des T-Stückes 10 ist ein Stützkörper 11 befestigt. Dieser Stützkörper

kann aus mehreren Einzelrohren bestehen. Ein Endstück 12 ist am nicht gezeigten Kessel als Austritt für das Klarfiltrat vorgesehen. Die Befestigung des Endstückes ist in gleicher Weise wie der Stützkörper 11 am T-Stück 10' angebracht.

Gemäss Fig. 4 besteht das T-Stück 10 des Sammelrohres 7 aus einem oberen waagrechten Rohrteil 13 und einem unteren Rohrteil 14. Vom Rohrteil 14 ist ein etwa halbkreisförmiges Segment herausgeschnitten. Es entsteht eine Vertiefung 15 und ein erhabener Rand 16. Im Innern des Randteiles 16 ist eine Nute 17 und eine Schulter 18 zu erkennen.

Der Kerzenkopf gemäss Fig. 5 besteht aus einem aus mehreren Rohren zusammengestellten Stützkörper 11, auf welchem das Filtergewebe 19 aufgezogen ist. Mit dem oberen Teil des Stützkörpers 11 ist ein Anschlussring 20 fest verschweisst. Im oberen Teil des Anschlussringes 20 ist eine Nut 21 eingedreht. Auf diese Weise wird die Schulter 22 gebildet.

In Fig. 6 ist die zusammengesetzte Befestigung beschrieben. Darin greift die Schulter 22 vom Anschlussring 20 in die Nut 17 des Rohrteiles 14 ein. In die Nut 21 vom Anschlussring 20 greift die Nut 18 vom Rohrteil 14 ein. Ein Füllring 23 wird an die Stelle des herausgeschnittenen Segmentes des Rohrteiles 14 eingeschoben. Das Füllteil 23 bewirkt eine gleichmässige Oberfläche auf welcher das Filtergewebe 19 aufliegt.

Fig. 7 zeigt den Füllring.

0098643

Patentansprüche

1. Vorrichtung zur Befestigung von Filterkerzen in einem Druckbehälter mit an herausnehmbaren Sammelrohren hintereinander angeordneter Filterkerzen, dadurch gekennzeichnet, dass die Befestigung jeder Filterkerze aus einem T-Rohrstück (10) mit einer halbkreisförmigen Eindrehung (Fig. 4) bestehend aus einer vertiefung (15) und einer Schulter (16) und das Gegenstück (Fig.5) mit einer in die Eindrehung (Fig.4) passenden Schulter (22) versehen ist.

2. Vorrichtung nach Anspruch 1, dadurch gekennzeichnet, dass die Befestigung an der Kupplungsstelle mit einem schlauchförmigen Filtergewebe (19) abgedeckt ist.

3. Vorrichtung nach den Ansprüchen 1 und 2, dadurch gekennzeichnet, dass die Schulter (22) am halben Umfang auf dem äusseren Rohrdurchmesser mit einem Füllring (23) abgedeckt ist.

4. Vorrichtung nach Anspruch 1, dadurch gekennzeichnet, dass die Sammelrohre (7) aus Kunststoff- T -Stücken hergestellt sind.

Fig. 1

Fig. 2

Fig. 7

Fig. 3

Fig. 4

Fig. 5

Fig. 6